(19) 

**Europäisches Patentamt**
**European Patent Office**
**Office européen des brevets**

(11)  **EP 2 192 666 A2**

(12)  **EUROPÄISCHE PATENTANMELDUNG**

(43) Veröffentlichungstag:
    02.06.2010  Patentblatt 2010/22

(21) Anmeldenummer: 09011757.3

(22) Anmeldetag: 15.09.2009

(51) Int Cl.:
    *H02H 9/08* (2006.01)

(84) Benannte Vertragsstaaten:
    AT BE BG CH CY CZ DE DK EE ES FI FR GB GR
    HR HU IE IS IT LI LT LU LV MC MK MT NL NO PL
    PT RO SE SI SK SM TR
    Benannte Erstreckungsstaaten:
    AL BA RS

(30) Priorität: 16.09.2008  DE 102008047528

(71) Anmelder: E.ON Avacon AG
    38350 Helmstedt (DE)

(72) Erfinder: Vielhauer, Armin
    38102 Braunschweig (DE)

(74) Vertreter: Harlacher, Mechthild
    E.ON Ruhrgas AG
    Huttropstrasse 60
    45138 Essen (DE)

(54) **Verfahren zum Erdschlussunabhängigen Kompensieren von Oberschwingungen der Spannungen an Anschlussknoten**

(57)    Bei einem Verfahren zum erdschlussunabhängigen Kompensieren von Oberschwingungen der Spannungen an Anschlussknoten in resonant geerdeten Drehstromnetzen, bei dem Oberschwingungsanteile reduziert werden, ist vorgesehen, dass ein aktives, paralleles Filter eingesetzt wird und dass dem Filter eine Regelung zugeführt wird, bei der durch Einspeisen eines Oberschwingungsstromes eine Sollvorgabe der Oberschwingungen in der Knotenspannung in einem erdschlussunabhängigen Dauerbetrieb erfolgt. Dieses Herausfiltern von erdschlussbedingten Einflüssen gewährleistet eine bessere Versorgungszuverlässigkeit.

**Fig. 4**

EP 2 192 666 A2

**Beschreibung**

Die Erfindung betrifft ein Verfahren zum erdschlussunabhängigen Kompensieren von Oberschwingungen der Spannungen an Anschlussknoten in resonant geerdeten Drehstromnetzen, bei dem Oberschwingungsanteile reduziert werden.

Oberschwingungsströme werden von als Stromquellen wirkenden nichtlinearen Verbrauchern in verschiedenen Frequenzen in das Versorgungsnetz eingespeist. Derartige Oberschwingungsströme führen an Netzimpedanzen und anderen Lasten zu Spannungsabfällen in entsprechenden Frequenzen. Da die Netzimpedanzen in der Regel sehr klein sind, führen selbst starke Stromverzehrungen zu relativ gering verzerrten Spannungsverläufen. Zudem kann eine Vorverzerrung in der Versorgungsspannung aus anderen angeschlossenen Netzen resultieren.

Der mittelspannungsseitige Sternpunkt eines Einspeisetransformators oder der Sternpunkt eines Sternpunktbildners ist regelmäßig über eine veränderliche Erdschlussdrossel mit einem Erdpunkt verbunden. Hat ein so ausgebildetes Mittelspannungsnetz einen Erdschluss in einem der drei Leiter, soll dieser Fehlerzustand, wie in der DE 10 2006 021 888 B3 beschrieben, im Hinblick auf die Versorgungszuverlässigkeit nicht zur sofortigen Abschaltung der fehlerhaften Leitung führen. Der bei einem Erdschluss fließende kapazitive Fehlerstrom ist durch die Erdkapazitäten des Mittelspannungsnetzes bedingt. Kapazitäten treten auch zwischen den Leitern untereinander auf, deren Beitrag zum Fehlerstrom im Falle eines einpoligen Erdschlusses ist jedoch vernachlässigbar. Im Falle eines Erdschlusses in einem Leiter wird die Erdkapazität dieses Leiters kurzgeschlossen, während sich die Spannungen an den Erdkapazitäten der beiden anderen, nicht vom erdschlussbetroffenen Leiter um den Faktor √3 erhöht und der kapazitive Fehlerstrom in den beiden anderen Leitern zum Fließen kommt.

Der Erfindung liegt die Aufgabe zugrunde, ein Verfahren der eingangs genannten Gattung aufzuzeigen, mit dem Oberschwingungen der Spannungen an Anschlussnoten erdschlussunabhängig wirksam kompensiert werden können.

Diese Aufgabe ist erfindungsgemäß dadurch gelöst, dass ein aktives, paralleles Filter eingesetzt wird, dass dem Filter eine Regelung zugeführt wird, bei der durch Einspeisen eines Oberschwingungsstromes eine Sollvorgabe der Oberschwingungen in der Knotenspannung in einem erdschlussunabhängigen Dauerbetrieb erfolgt.

Bei dem erfindungsgemäßen Verfahren werden für das aktive Filter Messgrößen des Netzes mit Hilfe einer Regelung verarbeitet, daraus wird ein einzuspeisender Kompensatorstrom berechnet. Der eingespeiste Strom entspricht dem Strom, der über die vorhandene Systemimpedanz die der Regelung entsprechende Spannung erzeugt.

Die Bemessung des einzuspeisenden Oberschwingungsstroms erfolgt vorzugsweise anhand eines adaptiven Algorithmus, mit dem mittels einer Messdatenaufbereitung erdschlussunabhängig die originären Oberschwingungsspannungen durch gezielte Stromeinspeisung kompensiert werden. Der eingesetzte Algorithmus umfasst die Schritte "Messwertaufbereitung", Bestimmen der Filterkennlinie und des Arbeitspunktes" und "Toleranzbandüberwachung".

Im ersten Schritt, der Messwertaufbereitung, wird die Knotenspannung gemessen. Erdschlussbedingte Einflüsse werden heraus gerechnet und somit die originären Spannungen als erdschlussunabhängige Regelgröße ermittelt, die an das Filter übergeben wird.

Im zweiten Schritt, dem Bestimmen der Filterkennlinie und des Arbeitspunktes, erfolgt durch Erzeugen eines Sprungs in zeitlich unmittelbarer Abfolge die Bestimmung zweier unabhängiger Messwertpaare $\underline{I}_{h,f}(t), \underline{U}_{h,MS}(t)$. Mit Hilfe dieser Messwertpaare wird die Kennlinie des Filters Anhand der Kennlinie und einer manuellen Sollwertvorgabe wird zudem ein Arbeitspunkt auf der Kennlinie bestimmt. Weiterhin wird das Filter auf diesen Arbeitspunkt fest eingestellt. Alternativ kann vorgesehen sein, dass über einen geeigneten Regelkreis unter Zuhilfenahme der Kennlinie des Filters die Sollgröße verfolgt wird.

Als originäre Oberschwingungsspannungen werden die Spannungen angesehen, die zu einem gleichen Zeitpunkt an einem Anschlussknoten herrschen, ohne dass ein Erdschluss gegeben ist.

Der dritte und fortlaufend über eine lange Zeit durchgeführte Schritt ist dann das Überwachen des manuell vorgegebenen Toleranzbandes. Hier werden die Regelgrößen aus Schritt 1 dahingehend überwacht, ob sie sich innerhalb des Toleranzbereiches befinden. Wenn der Toleranzbereich verlassen wird, wird das letzte Messwertpaar an Schritt 2 zurückgegeben und somit eine Neubestimmung der Filterkennlinie durchgeführt.

Bei dem erfindungsgemäßen Verfahren werden somit im Algorithmus die zeitlichen Veränderungen der Systemgrößen sowie die erdschlussbedingten systemimmanenten Rückkopplungen berücksichtigt. Dabei sind als Systemgrößen die Spannungsoberschwingungen der Knotenspannung und die Systemimpedanz zu verstehen.

Mit Hilfe des Algorithmus wird ein Zielwert der Oberschwingungsspannungen innerhalb eines Toleranzbandes unter Einsatz des aktiven Filters als gesteuerte oder geregelte, parallel einspeisende Stromquelle verfolgt.

Bei Feststellen eines Verlassens des Toleranzbandes wird eine neue Filterkennlinie sowie ein neuer Arbeitspunkt auf der Filterkennlinie bestimmt Diesem neuen Arbeitspunkt wird dann wieder ein Toleranzband zugeordnet.

Das Bestimmen der neuen Filterkennlinie sowie des neuen Arbeitspunktes wird anhand einer Auswertung einer erzwungenen Sprungantwort des Systems durchgeführt. Die Höhe des Sprungs richtet sich nach dem Ausmaß des Verlassens des Toleranzbandes. Das Maß des Verlassens des Toleranzbandes wird für ein Bestimmen der Höhe der Sprungantwort festgestellt, dieses Maß wird dann mit einem manuell vorgegebenen Faktor multipliziert, um die Sprungantwort deutlich von natürlichen Spannungen unterscheiden zu können. Unter Verwenden der alten Filterkennlinie wird dann ein diesem Sprung entsprechender Filterstrom generiert.

Ein Ausführungsbeispiel des erfindungsgemäßen Verfahrens, aus dem sich weitere erfinderische Merkmale ergeben, ist in der Zeichnung dargestellt. Es zeigen:

Fig. 1: eine schematische Ansicht des ersten Verfahrensschrittes, der Messwertaufbereitung;

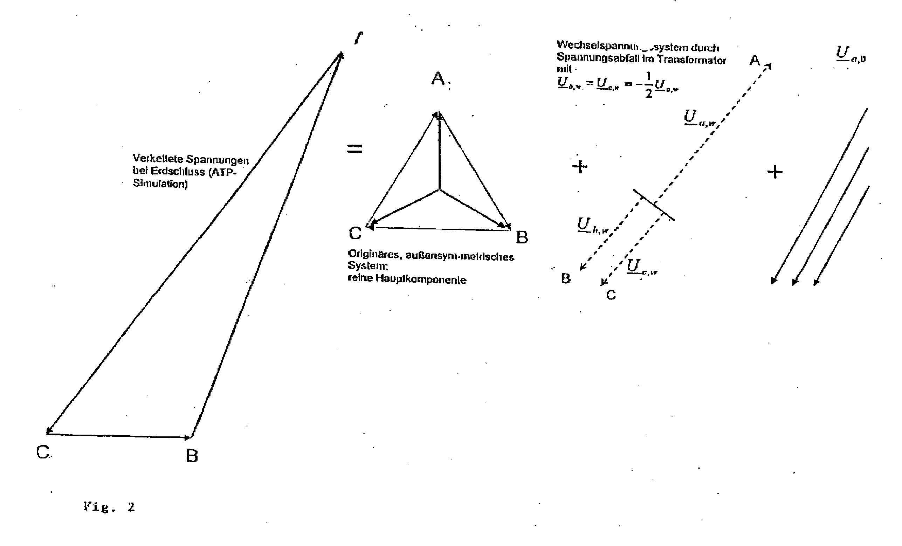

Fig. 2: eine grafische Deutung als Erläuterung des ersten Verfahrensschrittes;

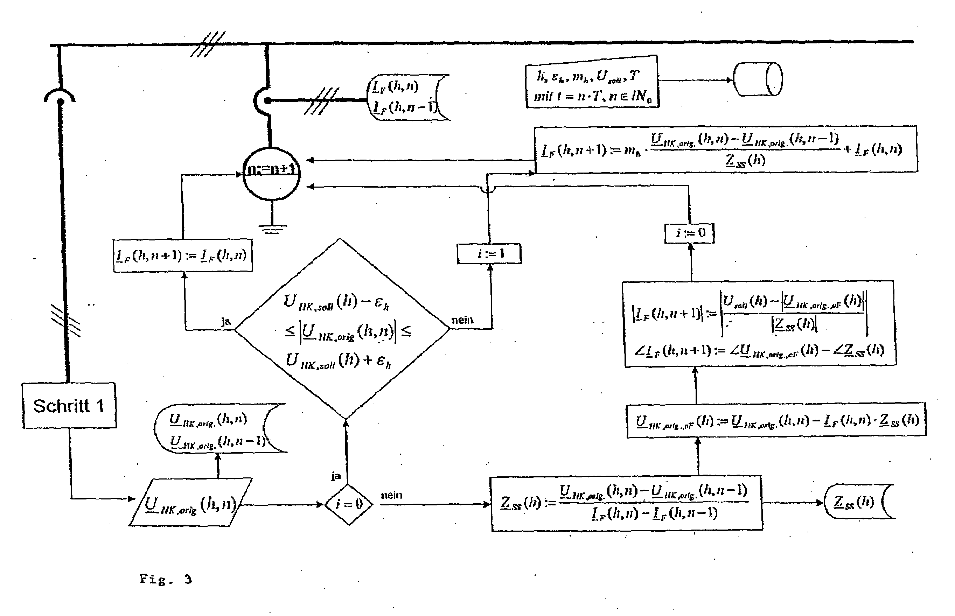

Fig. 3: eine grafische Darstellung des für den zweiten und dritten Verfahrensschrittes verwendeten Algorithmus, und

Fig. 4: eine grafische Darstellung der Filtergleichung.

Im ersten Verfahrensschrift, der Messwertaufbereitung, wird die erdschlussunabhängige Regelgröße ermittelt.

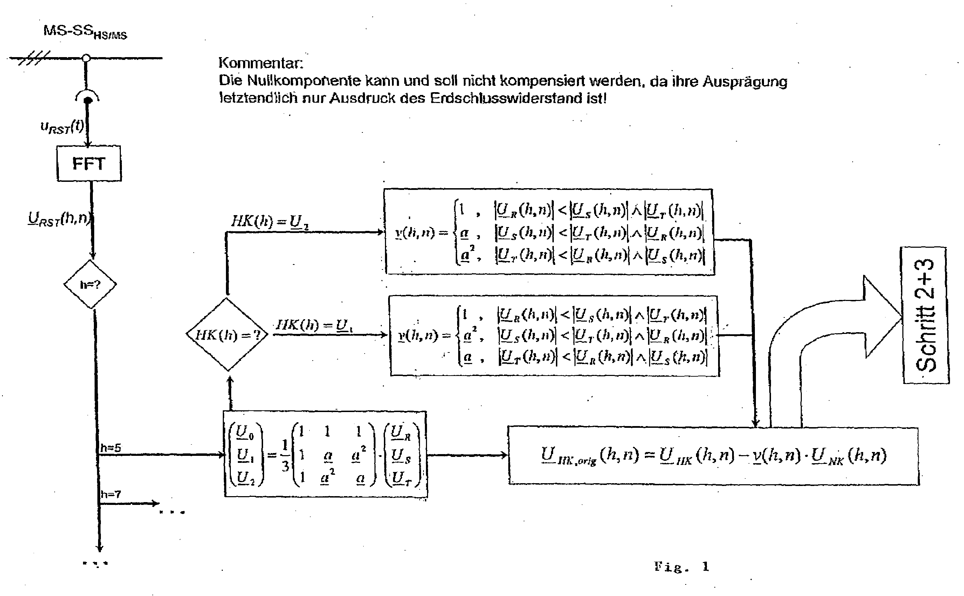

Die linke Darstellung in Fig. 1 zeigt verkettete Spannungen bei Erdschluss in einer ATP-Simulation. Das originäre außensymmetrische System als reine Hauptkomponente ist rechts daneben dargestellt. Zur Erläuterung ist zu sagen, dass nach Beendigung des Einschwingvorganges des Erdschlusses eine deutliche Unsymmetrie in den Oberschwingungen der Außenleiterspannungen zu messen Ist. Diese wird durch das dargestellte Wechselsystem hervorgerufen. Die Nullkomponente wird durch die Güte des Erdschlusses bestimmt.

In einem zweiten und dritten Schritt wird mit Hilfe eines Algorithmus ein Zielwert der Oberschwingungsspannungen innerhalb eines Toleranzbandes unter Einfluss eines aktiven Filters verfolgt.

Für den Algorithmus wird ein Filter mit nachstehender Filtergleichung Im Frequenzbereich benutzt:

Filtergleichung im Frequenzbereich

$$\left| \underline{U}_{HK,orig.}(h,t) \right| = \underline{U}_{HK,orig\_oF}(h,t) + \underline{I}_F(h,t) \cdot \underline{Z}_{SS}(h,t) \quad \text{mit} \quad \underline{Z}_{SS}(h,t) = \underline{Z}_k(h,t) // \left( \underline{Z}_{LdS}(h,t) + \underline{Z}_{HS}(h,t) \right)$$

*Kommentar: Die Steigung des Kegels wird durch $Z_{SS}$ bestimmt; die Impedanz Enfert sich zeitlich durch den Lastgang der Netzlast kontinuierlich, Stufungen des HS/MS-Trafos und Veränderungen in der Netzfopologie durch Schaltmaßnahmen sprunghaft. Der Z-Achsen Abschnitt des Kegels stellt den Betrag der Overschwingungsspannung ohne Filter ($U_{oF}$) dar. Die Ringstruktur im Kegel (s. Abb.) verdeutlicht den Verlauf der Iso-Vollen.*

Annahme: Die Volatilität von $Z_{SS}$ und $U_{oF}$ über der Reaktionszeit des Filters (ca. 0,04s; hauptsächlich beschränkt durch die FFT) ist vernachlässigbar.

Mit der Annahme lässt sich mit Hilfe zweier erzwungener Messwertpaare aus $I_F(h)$ und $U_{HK,orig.}(h)$ das System testen und die Unbekannten nach

$$\underline{Z}_{SS}(h) = \frac{\underline{U}_{HK,orig}(h,t=2) - \underline{U}_{HK,orig}(h,t=1)}{\underline{I}_F(h,t=2) - \underline{I}_F(h,t=1)} \quad \text{und} \quad \underline{U}_{HK,orig\_oF}(h) = \underline{U}_{HK,orig.}(h,t=2) - \underline{I}_F(h,t=2) \cdot \underline{Z}_{SS}(h)$$

bestimmen.

Einschränkung:

1. $I_F(h,t{=}1) \neq I_F(h,t{=}2)$!
2. Der in der Zeitspanne $\Delta$ t erzwungene Sprung $\Delta$ $U_{HK,orig.}(h,t)$ muss größer als natürliche Volatilität $U_{HK,orig.}(h,t)$ sein!

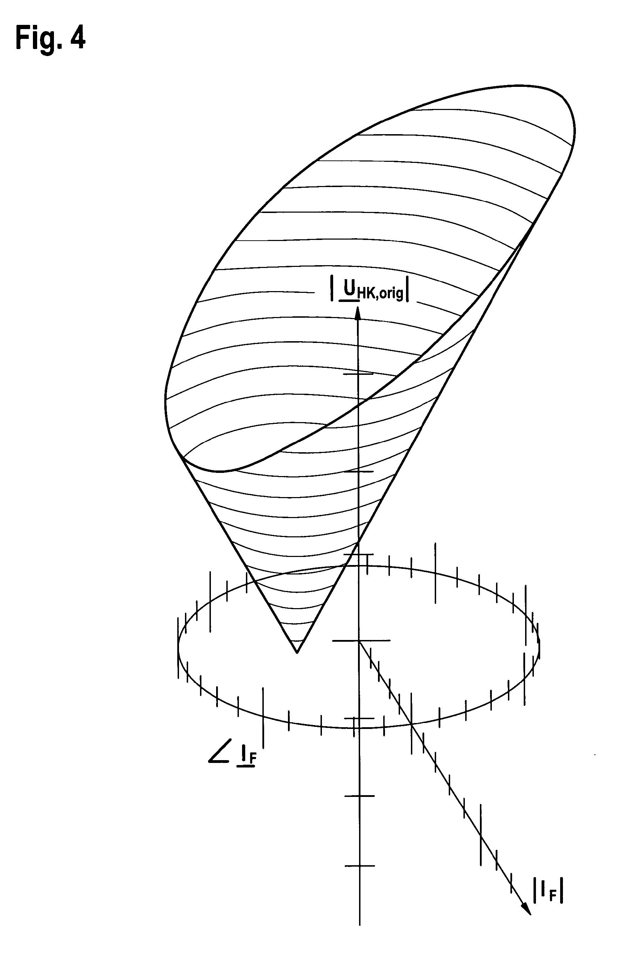

Fig. 4 schließlich zeigt eine grafische Darstellung der Filtergleichung für einen bestimmten Zeitpunkt und für eine bestimmte Frequenz.

## Patentansprüche

1. Verfahren zum erdschlussunabhängigen Kompensieren von Oberschwingungen der Spannungen an Anschlussknoten in resonant geerdeten Drehstromnetzen, bei dem Oberschwingungsanteile reduziert werden,

**dadurch gekennzeichnet,**
**dass** ein aktives, paralleles Filter eingesetzt wird, dass dem Filter eine Regelung zugeführt wird, bei der durch Einspeisen eines Oberschwingungsstromes eine Sollvorgabe der Oberschwingungen in der Knotenspannung in einem erdschlussunabhängigen Dauerbetrieb erfolgt.

2. Verfahren nach Anspruch 1,
   **dadurch gekennzeichnet, dass** die Bemessung des einzuspeisenden Oberschwingungsstromes anhand eines adaptiven Algorithmus durchgeführt wird, mit dem mittels einer Messdatenaufbereitung erdschlussunabhängig die originären Oberschwingungsspannungen durch gezielte Stromeinspeisung kompensiert wird.

3. Verfahren nach Anspruch 2,
   **dadurch gekennzeichnet, dass** im Algorithmus die zeitlichen Veränderungen der Systemgrößen sowie die erdschlussbedingte systemimmanente Rückkopplung berücksichtigt werden.

4. Verfahren nach Anspruch 3,
   **dadurch gekennzeichnet, dass** als Systemgröße die Knotenspannung gemessen wird und dass erdschlussbedingte Einflüsse herausgerechnet werden.

5. Verfahren nach einem der Ansprüche 1 bis 4,
   **dadurch gekennzeichnet, dass** mit Hilfe des Algorithmus ein Zielwert der Oberschwingungsspannungen innerhalb eines Toleranzbandes unter Einsatz des aktiven Filters als steuerbare, parallel einspeisende Stromquelle verfolgt wird, wobei bei Feststellen eines Verlassens des Toleranzbandes eine neue Filterkennlinie sowie ein neuer Arbeitspunkt auf der Filterkennlinie bestimmt werden.

6. Verfahren nach Anspruch 5,
   **dadurch gekennzeichnet, dass** das Bestimmen der neuen Filterkennlinie sowie des neuen Arbeitspunktes anhand einer Auswertung einer erzwungenen Sprungantwort des Systems durchgeführt wird.

7. Verfahren nach Anspruch 6,
   **dadurch gekennzeichnet, dass** für ein Bestimmen der Höhe der Sprungantwort das Maß des Verlassens des Toleranzbandes festgestellt wird, mit einem manuell vorgegebenen Faktor multipliziert wird und unter Verwenden der alten Filterkennlinie ein diesem Sprung entsprechender Filterstrom generiert wird.

MS-SS$_{HS/MS}$

$u_{RST}(t)$

**FFT**

$\underline{U}_{RST}(h,n)$

$h=?$

$h=5$

$h=7$

$\cdots$

**Kommentar:**
Die Nullkomponente kann und soll nicht kompensiert werden, da ihre Ausprägung letztendlich nur Ausdruck des Erdschlusswiderstand ist!

$HK(h) = \underline{U}_2$

$$\underline{v}(h,n) = \begin{cases} 1 \, , & |\underline{U}_R(h,n)| < |\underline{U}_S(h,n)| \wedge |\underline{U}_T(h,n)| \\ \underline{a} \, , & |\underline{U}_S(h,n)| < |\underline{U}_T(h,n)| \wedge |\underline{U}_R(h,n)| \\ \underline{a}^2 , & |\underline{U}_T(h,n)| < |\underline{U}_R(h,n)| \wedge |\underline{U}_S(h,n)| \end{cases}$$

$HK(h) = ?$

$HK(h) = \underline{U}_1$

$$\underline{v}(h,n) = \begin{cases} 1 \, , & |\underline{U}_R(h,n)| < |\underline{U}_S(h,n)| \wedge |\underline{U}_T(h,n)| \\ \underline{a}^2 , & |\underline{U}_S(h,n)| < |\underline{U}_T(h,n)| \wedge |\underline{U}_R(h,n)| \\ \underline{a} \, , & |\underline{U}_T(h,n)| < |\underline{U}_R(h,n)| \wedge |\underline{U}_S(h,n)| \end{cases}$$

$$\begin{pmatrix} \underline{U}_0 \\ \underline{U}_1 \\ \underline{U}_2 \end{pmatrix} = \frac{1}{3} \begin{pmatrix} 1 & 1 & 1 \\ 1 & \underline{a} & \underline{a}^2 \\ 1 & \underline{a}^2 & \underline{a} \end{pmatrix} \cdot \begin{pmatrix} \underline{U}_R \\ \underline{U}_S \\ \underline{U}_T \end{pmatrix}$$

$$\underline{U}_{HK,orig}(h,n) = \underline{U}_{HK}(h,n) - \underline{v}(h,n) \cdot \underline{U}_{NK}(h,n)$$

**Schritt 2+3**

Fig. 1

EP 2 192 666 A2

Verkettete Spannungen
bei Erdschluss (ATP-
Simulation)

A

=

C          B

Originäres, außensymmetrisches
System:
reine Hauptkomponente

Wechselspannun.._.system durch
Spannungsabfall im Transformator
mit

$$\underline{U}_{b,w} = \underline{U}_{c,w} = -\frac{1}{2}\underline{U}_{a,w}$$

A

$\underline{U}_{a,w}$

+

$\underline{U}_{b,w}$

B
$\underline{U}_{c,w}$
C

+

$\underline{U}_{a,0}$

C          B

Fig. 2

EP 2 192 666 A2

$\underline{I}_F(h,n)$
$\underline{I}_F(h,n-1)$

$h, \varepsilon_h, m_h, U_{soll}, T$
mit $t = n\cdot T,\ n \in IN_0$

$\underline{I}_F(h,n+1) := m_h \cdot \dfrac{\underline{U}_{IIK,orig.}(h,n) - \underline{U}_{IIK,orig.}(h,n-1)}{\underline{Z}_{SS}(h)} + \underline{I}_F(h,n)$

n:=n+1

$\underline{I}_F(h,n+1) := \underline{I}_F(h,n)$

i:=1

i:=0

$U_{IIK,soll}(h) - \varepsilon_h$
$\le \left|\underline{U}_{IIK,orig}(h,n)\right| \le$
$U_{IIK,soll}(h) + \varepsilon_h$

ja

nein

$\left|\underline{I}_F(h,n+1)\right| := \dfrac{\left|U_{soll}(h) - \left|\underline{U}_{IIK,orig.,oF}(h)\right|\right|}{\left|\underline{Z}_{SS}(h)\right|}$
$\angle \underline{I}_F(h,n+1) := \angle \underline{U}_{IIK,orig.,oF}(h) - \angle \underline{Z}_{SS}(h)$

$\underline{U}_{IIK,orig.,oF}(h) := \underline{U}_{IIK,orig.}(h,n) - \underline{I}_F(h,n)\cdot \underline{Z}_{SS}(h)$

Schritt 1

$\underline{U}_{IIK,orig.}(h,n)$
$\underline{U}_{IIK,orig.}(h,n-1)$

$\underline{U}_{IIK,orig}(h,n)$

i=0

ja

nein

$\underline{Z}_{SS}(h) := \dfrac{\underline{U}_{IIK,orig.}(h,n) - \underline{U}_{IIK,orig.}(h,n-1)}{\underline{I}_F(h,n) - \underline{I}_F(h,n-1)}$

$\underline{Z}_{SS}(h)$

Fig. 3

# Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006021888 B3